# EUROPÄISCHE PATENTANMELDUNG

(11) **EP 0 800 067 A1**
(43) Veröffentlichungstag der Anmeldung: **08.10.1997**
(21) Anmeldenummer: 97104791.5
(22) Anmeldetag: 20.03.1997
(51) Int. Cl.: G01K 11/24

(54) **Verfahren und Einrichtung zum Bestimmen der Temperatur in einem Objekt un Vorrichtung zum Erhitzen eines Objekts**

(30) Priorität: 02.04.1996 DE 19613244
(71) Anmelder: SIEMENS AKTIENGESELLSCHAFT, 80333 München (DE)
(72) Erfinder: Bechtold, Mario, Dipl.-Ing., 91341 Röttenbach (DE); Granz, Bernd, Dr., 90522 Oberasbach (DE)

(57) **Zusammenfassung**

Aus einer Änderung der Konturen (7',8') eines hinter dem Objekt (3) angeordneten Reflektors (4) in einem Ultraschall-B-Bild wird die Temperatur im Objekt bestimmt. Bevorzugte Anwendung bei der Thermotherapie mit fokussiertem Ultraschall (U) zur Regelung der Schallintensität.

## Beschreibung

Die Erfindung betrifft ein Verfahren und eine Einrichtung zum Bestimmen der Temperatur in einem Objekt. Die Erfindung betrifft ferner eine Vorrichtung zum Erhitzen eines Objekts.

Zum Zerstören von Tumoren oder einer vergrößerten Prostata (Benigne Prostata Hyperplasie) ist ein auch als Thermotherapie bezeichnetes Verfahren bekannt, bei dem der Fokus von fokussiertem Hochintensitäts-Ultraschall eines Ultraschallsenders auf eine ausgesuchte Zone innerhalb eines menschlichen Körpers justiert wird. Durch das Einstrahlen des Ultraschalls erhitzt sich das Gewebe im Fokus auf Temperaturen bis in den Bereich von 60° C bis 90° C und wird dadurch zerstört. Gewebeteile außerhalb der ausgesuchten Zonen sollen dabei nicht geschädigt werden. Durch Bewegen des Fokus werden nacheinander kleine Gebiete der ausgesuchten Zone zerstört. Diese kleinen Gebiete haben typischerweise laterale, d.h. senkrecht zur Ultraschallausbreitungsrichtung gerichtete, Abmessungen von 3 · 3 mm² und axiale, d.h. parallel zur Ultraschallausbreitungsrichtung gerichtete, Abmessungen von 10 mm. Ein solches Abrastern erlaubt die Therapie von auch mehreren Zentimeter großen Zonen.

Wichtig ist bei der Thermotherapie die Kontrolle der Temperatur im Fokus in deren dreidimensionaler geometrischer Ausdehnung und zeitlichem Verlauf. Man muß deshalb die für die Zerstörung einer ausgesuchten Zone notwendige Energie, insbesondere die Ultraschallamplitude und deren zeitlichen Verlauf, genau einstellen. Dabei spielen anatomische Einflüsse im Schallaufweg vom Sender zum Fokus eine große Rolle, so daß man im allgemeinen diese Energie nicht von vorneherein berechnen kann. Aus diesen Gründen muß man die Gewebszerstörung durch eine Messung der Temperatur im Fokus kontrollieren. Bei dieser Temperaturmessung ist wesentlich, daß die Messung den Ultraschall-Fokus nicht beeinflußt und den Patienten nicht zusätzlich belastet. Ideal wäre deshalb eine nichtinvasive Messung, bei der man von außen während der Thermotherapie die Zerstörung der ausgesuchten Zone in ihrem zeitlichen und örtlichen Verlauf erkennen kann.

Bei einer ersten, aus *K. Hynynen et al*. 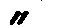 *Tissue Thermometry during Ultrasound Exposure", Eur. Urol. 23 (Suppl. 1), 1993, Seiten 12-16* bekannten Methode wird die Veränderung des Gewebes in Ausdehnung und in ihrem Veränderungsgrad mittels MR-Abbildung verfolgt. Diese Methode verlangt zum einen ein MR-Gerät, zum anderen ist die Thermotherapie innerhalb des Magnetfeldes nicht ganz problemlos.

Eine zweite, aus *N.T. Sanghvi et al.* 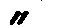 *Transrectal Ablation of Prostate Tissue using Focused Ultrasound", Proceedings IEEE Ultrasonics Symposium, 1993, Seiten 1207-1210* bekannte Methode beruht auf der Temperaturmessung im Gewebe selbst mittels eingestochener Thermopaare. Dabei wird zum einen der Patient mehrfach angestochen, zum anderen können die Thermopaare die Temperaturerzeugung im Ultraschallfokus beeinflussen.

Eine dritte, aus *R. Seip et al.* 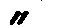 *Non-invasive Detection of Thermal Effects due to Highly Focused Ultrasound Fields", Proceedings IEEE Ultrasonics Symposium, 1993, Seiten 1229-1232* bekannte Methode besteht in der Auswertung von A-Scan-Linien in einem B-Bild. Verändert sich die Temperatur in einer Zone im Gewebe, so kann sich die Reflektivität in dieser Zone so ändern, daß sie im B-Bild aufgehellt erscheint. Durch Auswerten von A-Scans, die durch diese Zonen gehen, erhält man quantitativ erhöhte Reflexionswerte, die man in Beziehung zu dem Zerstörungszustand der Zone bringt.

Eine zur dritten Methode ähnliche, vierte Methode ist in *DE-A-42 29 817* offenbart. Zu einem ersten Zeitpunkt wird das Objekt (Gewebe) mit Ultraschallpulsen beschallt, und die vom Objekt reflektierten Ultraschallechosignale werden gespeichert. Zu einem zweiten Zeitpunkt wird das Objekt wieder mit Ultraschallpulsen beschallt, und die vom Objekt diesmal reflektierten Ultraschallechosignale werden durch Differenzbildung mit den gespeicherten Ultraschallechosignalen verglichen. Aus diesem Vergleich wird eine Temperaturänderung im beschallten Bereich des Objekts ermittelt. Dieses Verfahren zur Temperaturbestimmung wird in der Thermotherapie eingesetzt.

Der Erfindung liegt nun die Aufgabe zugrunde, eine Möglichkeit zur nichtinvasiven Messung der Temperatur in einem Objekt, insbesondere im menschlichen Gewebe, anzugeben, die eine zuverlässige Temperaturkontrolle bei der Thermotherapie ermöglicht.

Diese Aufgabe wird gemäß der Erfindung gelöst mit den Merkmalen des Anspruchs 1 bzw. des Anspruchs 4.

Das Verfahren zum Bestimmen der Temperatur in einem Objekt umfaßt die Verfahrensschritte:
a) Erzeugen von Ultraschallpulsen,
b) Beschallen des Objekts sowie eines in einer Laufrichtung der Ultraschallpulse hinter dem Objekt angeordneten akustischen Reflektors mit diesen Ultraschallpulsen,
c) Erzeugen eines Bildes, das wenigstens eine Kontur des Reflektors darstellt, aus reflektierten Ultraschallechosignalen und
d) Vergleichen der Kontur des im Bild dargestellten Reflektors mit einer vorab ermittelten Kontur des Reflektors im Bild bei einer vorgegebenen Referenztemperatur im Objekt und Ermitteln der Temperatur im Objekt anhand dieses Vergleichs.

Die Einrichtung zum Bestimmen der Temperatur in einem Objekt umfaßt
a) ein Ultraschallabbildungssystem zum Erzeugen von Ultraschallpulsen und Richten dieser Ultraschallpulse auf das Objekt und einen in Laufrichtung der Ultraschallpulse hinter dem Objekt angeordneten akustischen Reflektor sowie zum Aufbau eines Bildes, das wenigstens eine Kontur des Reflektors darstellt, aus reflektierten Ultraschallechosignalen und
b) eine Analyseeinrichtung zum Bestimmen der Temperatur im Objekt durch Vergleichen der Kontur des Reflektors im Bild mit einer vorab ermittelten Kontur des Reflektorabbilds bei einer vorgegebenen Referenztemperatur im Objekts.

Das Verfahren und die Einrichtung erlauben eine einfache nicht-invasive Bestimmung der Temperatur in einem Objekt, beispielsweise einem Gewebe im menschlichen Körper.

Vorteilhafte Weiterbildungen und Ausgestaltungen des verfahrens und der Einrichtung ergeben sich aus den jeweils abhängigen Ansprüchen.

Demnach ist in einer vorteilhaften Ausführungsform eine Mustererkennung zum Vergleichen der Konturen vorgesehen, die insbesondere mit Hilfe eines neuronalen Netzes ausgebildet sein kann.

Das Bild des Ultraschallabbildungssystem kann ferner ein Sektor-Scan oder auch ein Linear-Scan sein.

In einer besonders vorteilhaften Ausführungsform ist die Einrichtung zum Bestimmen der Temperatur in einem Objekt Teil einer Vorrichtung zum Erwärmen dieses Objekts, die ferner eine Behandlungseinrichtung zum Senden von auf das Objekt fokussiertem Ultraschall enthält. Die Einrichtung zum Bestimmen der Temperatur in dem Objekt steht dann mit der Behandlungseinrichtung in Wirkverbindung zum Regeln der Temperatur im Objekt durch Steuern der Intensität des von der Behandlungseinrichtung auf das Objekt fokussierten Ultraschalls. Die Einrichtung zum Bestimmen der Temperatur im Objekt kann dann insbesondere ein Warnsignal erzeugen, wenn die Änderung der Kontur des Reflektorabbilds eine vorbestimmte Grenze überschreitet, das Objekt also zu heiß oder zu kalt wird.

Zur weiteren Erläuterung der Erfindung wird auf die Zeichnung Bezug genommen, in deren
- FIG 1: eine Vorrichtung zum Erhitzen eines Objekts mit Ultraschall,
- FIG 2: ein Ultraschallbild vor dem Erhitzen des Objekts und
- FIG 3: ein Ultraschallbild während des Erhitzen des Objekts
jeweils schematisch dargestellt sind. Einander entsprechende Teile sind mit denselben Bezugszeichen versehen.

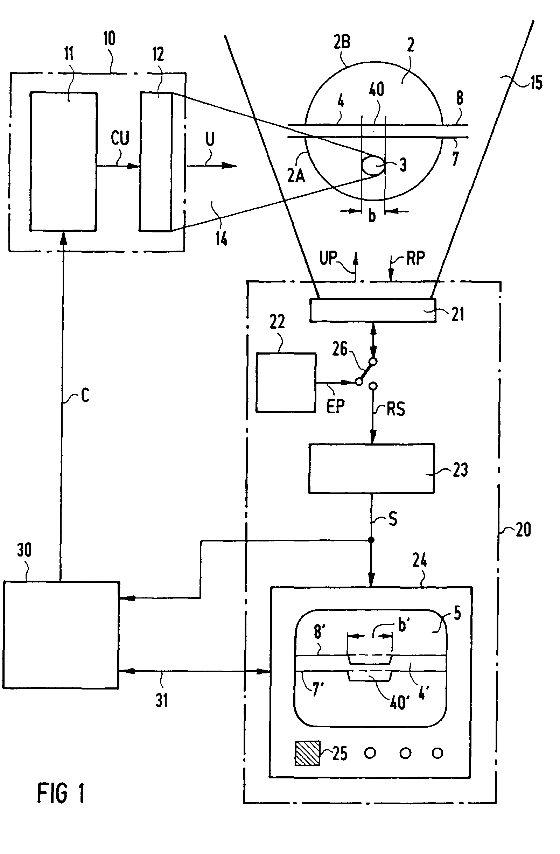

In FIG 1 ist eine Vorrichtung zum Erhitzen eines Objekts mit Ultraschall dargestellt. Die Vorrichtung umfaßt eine Behandlungseinrichtung 10 zum Senden von Ultraschall U, der auf das Objekt 3 fokussiert wird. Durch die Energie des Ultraschalls U erhitzt sich das im Fokus des Ultraschalls U liegende Objekt 3. Im dargestellten Ausführungsbeispiel ist das Objekt 3 ein Teilgebiet einer Prostata 2. Durch die Prostata 2 verläuft ein Harnleiter (Urether) als Reflektor 4. Die Behandlungseinrichtung 10 enthält eine Wandlereinrichtung 12 und eine Steuereinrichtung 11. Die Steuereinrichtung 11 steuert die Wandlereinrichtung 12 mit elektrischen Steuersignalen CU an. Diese elektrischen Steuersignale CU wandelt die Wandlereinrichtung 12 in die Ultraschallwellen U um. Als Behandlungseinrichtung 10 kann jedes zur Thermotherapie geeignete Ultraschallgerät verwendet werden. Insbesondere kann die Wandlereinrichtung 12 der Behandlungseinrichtung 10 ein Array ringförmiger Wandlerelemente sein, die konzentrisch zueinander angeordnet sind. Die Arrayoberfläche kann konvex gekrümmt sein, um eine Fokussierung des Ultraschalls U zu erleichtern.

Der vom fokussierten Ultraschall U der Behandlungseinrichtung 10 beschallte Raumbereich ist mit 14 bezeichnet.

Es ist nun ferner ein Ultraschallabbildungssystem 20 vorgesehen, das Ultraschallpulse UP in ein Raumgebiet 15 aussendet und die aus diesem Raumgebiet 15 reflektierten Ultraschallechopulse (Ultraschallechosignale) RP zum Aufbau eines Bildes 5 von in dem Raumgebiet 15 liegenden Objekten auswertet. Das Ultraschallabbildungssystem 20 wird so angeordnet oder ausgerichtet, daß das im Fokusbereich des Ultraschalls U der Behandlungseinrichtung 10 liegende Objekt 3, also das Teilgebiet der Prostata 2, in Laufrichtung der Ultraschallpulse UP gesehen vor dem Reflektor 4, also dem Harnleiter, angeordnet ist. Das Objekt 3 liegt somit in einem vor dem Reflektor 4 angeordneten Teilbereich 2A der Prostata 2. Der hinter dem Reflektor 4 liegende Teilbereich der Prostata 2 ist mit 2B bezeichnet. Das mit den Ultraschallpulsen UP des Ultraschallabbildungssystems 20 beschallte Raumgebiet 15 ist vorzugsweise ein ebenes Raumgebiet, insbesondere ein Sektor-Scan-Gebiet. Als Ultraschallabbildungssystem 20 können handelsübliche B-Scan-Geräte verwendet werden. Ein solches Ultraschallabbildungssystem 20 umfaßt insbesondere eine Ultraschallwandleranordnung 21, insbesondere ein Array von piezoelektrischen Wandlerelementen, zum Senden eines gepulsten Ultraschallstrahls, der in dem Raumgebiet 15 geschwenkt werden kann. Die Ultraschallwandleranordnung 21 ist über einen Sende-Empfangs-Schalter (Duplexer) 26 entweder mit einem Sender 22 oder mit einem Empfänger 23 elektrisch verbindbar. Der Sender 22 steuert im Sendebetrieb die Ultraschallwandleranordnung 21 mit elektrischen Pulsen EP an, die von der Ultraschallwandleranordnung 21 in Ultraschallpulse UP umgewandelt werden. In einem Empfangsbetrieb werden die reflektierten Ultraschallechopulse RP von der Ultraschallwandleranordnung 21 in elektrische Empfangssignale RS umgewandelt und dem Empfänger 23 zugeführt. Der Empfänger 23 wandelt die elektrischen Empfangssignale RS der Ultraschallwandleranordnung 21 in Bildsignale S um, mit denen ein Bild 5 auf dem Bildschirm eines Monitors 24 aufgebaut wird. Das Bild 5 kann einen Ausschnitt des Raumgebiets 15 oder auch das ganze Raumgebiet 15 in Originalgröße, in einer Verkleinerung oder in einer Vergrößerung darstellen. Das Abbild des Reflektors 4 im Bild 5 auf dem Monitor 24 ist mit 4' bezeichnet. Die in Laufrichtung des Ultraschallpulse UP gesehen vordere Kontur des Reflektors 4 ist mit 7 bezeichnet und die hintere Kontur mit 8. Das Abbild der vorderen Kontur 7 des Reflektors 4 im Bild 5 ist mit 7' bezeichnet und das Abbild der hinteren Kontur 8 mit 8'. Im dargestellten Ausführungsbeispiel ist das Bild 5 gegenüber dem Original vergrößert.

Wegen der Einstrahlung des fokussierten Ultraschalls U erwärmt sich das im Fokus des Ultraschalls U liegende Objekt 3. Dies hat eine Veränderung des akustischen Brechungsindex in dem Objekt 3 zur Folge. Dadurch wiederum verändern sich die Laufzeiten der durch das Objekt 3 hindurchgehenden Ultraschallpulse UP und der am Reflektor 4 reflektierten und nochmals durch das Objekt 3 hindurchlaufenden reflektierten Ultraschallechopulse RP. Diese Änderung der Laufzeiten der Ultraschallpulse UP und der Ultraschallechopulse RP bewirkt eine Änderung der Konturen 7' und 8' des Reflektors 4' im Bild 5 in einem Teilbildbereich 40', der dem Abbild eines in Laufrichtung der Ultraschallpulse UP unmittelbar hinter dem Objekt 3 liegenden Teilbereichs 40 des Reflektors 4 entspricht. Die Abmessung dieses Teilbereichs 40 in der Schnittebene 15 entspricht im wesentlichen der Abmessung b des Objekts 3. Die Abmessung des Teilbildbereichs 40' im Bild 5 ist mit b' bezeichnet und ist aufgrund der vergrößerten Darstellung im Bild 5 größer dargestellt als die Originalabmessung b. Die Erwärmung des Objekts 3 im Laufweg der Ultraschallpulse UP und RP hat im allgemeinen eine Ausbuchtung der Konturen 7' und 8' des Reflektorabbildes 4' zur Folge, wobei beide Konturen 7' und 8' im Teilbildbereich 40' in der gleichen Richtung verschoben werden. Bei einer Erhöhung der Laufzeiten der Ultraschallpulse UP und RP im Objekt 3 infolge der Temperaturerhöhung im Objekt 3 werden die Konturen 7' und 8' im Teilbereich 40' in einer Richtung verschoben, die der Ausbreitungsrichtung der reflektierten Ultraschallechopulse RP entspricht. Umgekehrt wurden bei einer Erniedrigung der Laufzeiten infolge einer Temperaturerniedrigung im Objekt 3 die Konturen 7' und 8' im Teilbildbereich 40' in der entgegengesetzten Richtung verschoben. Die ursprünglichen Konturen 7' und 8' ohne Einstrahlung des fokussierten Ultraschalls U sind im Bild 5 gestrichelt eingezeichnet. Die Änderung der Konturen 7' und 8' des Reflektorabbildes 4' ist eine virtuelle Änderung. Die Konturen 7 und 8 des echten Reflektors 4 bleiben von der Erwärmung des Objekts 3 praktisch unbeeinflußt.

Der Grad der Abweichung der Konturen 7' und 8' im Teilbildbereich 40' von den ursprünglichen Konturen ist somit ein Maß für die Temperatur im Objekt 3 und damit insbesondere auch für den Zerstörungsgrad des entsprechenden Teilgebiets der Prostata 2 bei der Thermotherapie. Die Vorrichtung enthält nun zum Auswerten der Konturveränderung als Maß für die Temperatur im Objekt 3 eine Analyseeinrichtung 30, die die aktuellen Konturen 7' und 8' des Reflektorabbildes 4' bestimmt und mit vorab bestimmten Konturen bei einer Referenztemperatur im Objekt 3 vergleicht. Die Referenzkonturen des Reflektorabbildes 4' können beispielsweise vor Beginn der Thermotherapie bei Körpertemperatur aufgenommen werden. Die Analyseeinrichtung 30 erzeugt nun in Abhängigkeit von dem Konturenvergleich ein Kontrollsignal C zum Steuern der Steuereinrichtung 11 der Behandlungseinrichtung 10. Durch dieses Kontrollsignal C kann die Intensität (Leistung, Amplitude) des Ultraschalls U der Behandlungseinrichtung 10 geregelt werden. Insbesondere kann bei Überschreiten einer bestimmten Grenze für die Verschiebung der Konturen 7' und 8' im Teilbildbereich 40' der Ultraschall U in seiner Intensität verringert werden oder ganz abgeschaltet werden.

Die Konturänderungen des Reflektorabbilds 4' im Bild 5 kann eine untersuchende Person beobachten und beispielsweise als Maß für den erreichten Erfolg der Therapie auswerten. Ultraschallbilder wie das B-Bild 5 stellen sich allgemein in dem Darstellungsmedium, beispielsweise auf dem Monitor 24 als Helligkeitsmuster, bestehend aus einzelnen, nicht zusammenhängenden Flecken, dar. Dieses Helligkeitsmuster verbinden das Auge und das Gehirn des Betrachters zu zusammenhängenden Konturen, die dem dargestellten Körperteil entsprechen.

In der dargestellten, besonders vorteilhaften Ausführungsform führt die Analyseeinrichtung 30 zum Erkennen der Konturänderungen im Teilbildbereich 40' des Reflektorabbildes 4' eine automatische Mustererkennung durch. Zur Mustererkennung werden die Bildsignale, also die Pixel und ihre zugehörigen Helligkeitswerte, einer Merkmalsextraktionsstufe zugeführt, die einen Datensatz (Merkmalsvektor) von charakteristischen Merkmalen berechnet, der als Muster für eine der Konturen 7' und 8' oder beide Konturen 7' und 8' dient. Der ermittelte Merkmalsvektor wird sodann einer Klassifikationsstufe zugeführt und von der Klassifikationsstufe mit vorher eintrainierten und gespeicherten Referenzmustern für die Konturen 7' und 8' verglichen. Es wird das anhand eines vorgegebenen Ähnlichkeitsmaßes ähnlichste Referenzmuster ermittelt und dessen Bedeutung oder Klassenzugehörigkeit als Kennungsergebnis ausgegeben. Das bedeutet, daß die Konturen eines für die Vorrichtung vorgesehenen, vorab bekannten Reflektors von der Analyseeinrichtung 30 mit Hilfe eines lernfähigen Systems, beispielsweise eines neuronalen Netzes, oder eines Computers mit einem geeigneten Algorithmus als Referenzmuster bei einer Referenztemperatur erarbeitet werden und daß während der Thermotherapie oder allgemein der Bestimmung der Temperatur die aktuellen Konturen 7' und 8' des Reflektorabbilds 4' mit den gespeicherten Referenzmustern verglichen werden. Mit Hilfe der Mustererkennung werden also die hellen oder dunklen Zonen im Bild 5 als zusammenhängende Linien oder Flächen erkannt.

Software zur Mustererkennung, die eine Erkennung einer Konturveränderung leistet, ist an sich bekannt. Eine solche Konturerkennung für den dreidimensionalen Fall ist beispielsweise aus *F. G. Balen et al.* "*3 -dimensional reconstruction of ultrasound images of the uterine cavity*"*, The British Journal of Radiology, 66, 1993, 588 - 591* bekannt, deren Inhalt in die vorliegende Anmeldung miteinbezogen wird.

Sind die Linien, d.h. die Konturen 7' und 8', erst einmal von der Analyseeinrichtung 30 erkannt, lassen sich geometrische Eigenschaften dieser Linien wie Krümmungen, Knicke oder Überschneidungen leicht von der Analyseeinrichtung 30 erkennen. Auch zeitliche Änderungen dieser Konturen lassen sich leicht verfolgen und aus den quantitativ meßbaren Änderungen Maßnahmen festlegen.

Zur Mustererkennung kann die Analyseeinrichtung 30 direkt mit dem Empfänger 23 verbunden sein und dessen Bildsignale S auswerten oder mit dem Monitor 24 zum Auswerten des Bildes 5 über eine elektrische Verbindung 31. Die Analyseeinrichtung 30 kann auch ein optisches oder akustisches Warnsignal für die die Thermotherapie durchführende Person erzeugen, wenn die Konturänderung im Teilbildbereich 40' eine vorbestimmte Grenze überschreitet und somit die Temperatur im Objekt 3 einen vorbestimmten Wert überschreitet. Das Warnsignal kann insbesondere als akustisches Warnsignal über einen im Monitor 24 eingebauten Lautsprecher 25 ausgegeben werden. Das Warnsignal kann dann in elektrischer Form von der Kontrolleinrichtung 30 über die elektrische Verbindung 31 zum Monitor 24 übertragen werden.

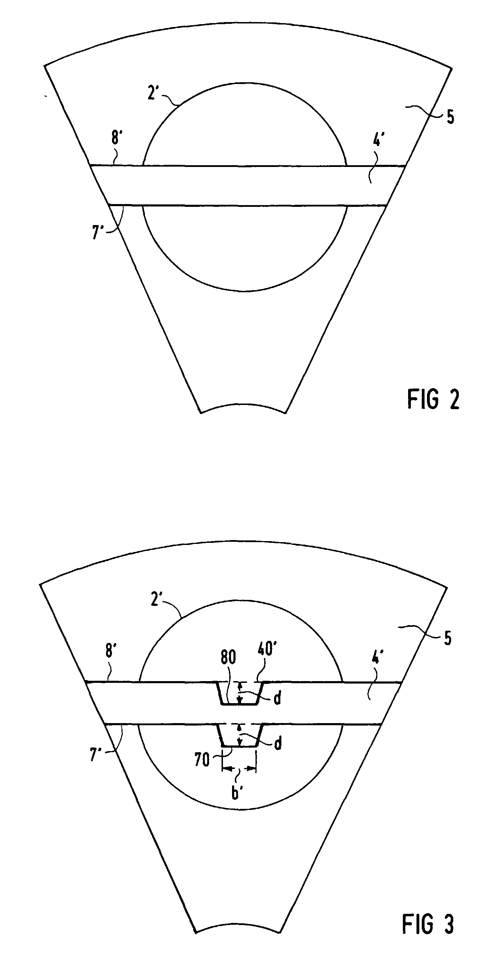

Anhand der FIG 2 und 3 wird die Auswertung der Konturänderung des Reflektorabbilds 4' nochmals naher erläutert. In den FIG 2 und 3 ist jeweils ein Ultraschall-Sektor-Scan als Bild 5 dargestellt. Jedes Bild 5 zeigt das Abbild eines Reflektors 4' mit Konturen 7' und 8'. Der abgebildete Reflektor 4 kann wieder wie in FIG 1 der Harnleiter in einer Prostata 2 sein. Das Abbild der Prostata ist mit 2' bezeichnet.

In FIG 2 ist ein Ausführungsbeispiel gezeigt, bei dem das vor dem Reflektor 4 liegende Objekt 3 nicht erwärmt wird. Das Reflektorabbild 4' zeigt zusammenhängende und insbesondere gerade Konturen 7' und 8'. Die Konturen 7' und 8' können auch gekrümmt sein, beispielsweise wenn sich der Harnleiter selbst krümmt.

In FIG 3 ist dagegen eine Situation gezeigt, bei der das Gewebe der Prostata in einem Teilgebiet als Objekt 3 vor dem Reflektor 4 lokal erwärmt wird. Das Bild des Reflektors 4' zeigt nun eine (virtuelle) Ausbuchtung seiner Konturen. Die vordere Kontur 7'des Reflektorabbilds 4' zeigt eine im dargestellten Ausführungsbeispiel parallel zur ursprünglichen Kontur verlaufende Ausbuchtung 70 und ist gegenüber der ursprünglichen Kontur in FIG 2 um einen Abstand d parallel verschoben. Es können aber auch gekrümmte Ausbuchtungen auftreten. Die Breite b' der Ausbuchtung 70 entspricht im wesentlichen - unter Berücksichtigung etwaiger Skalierungsfaktoren im Bild 5 - der Breite b des erhitzten Gebietsobjekts 3 in der Prostata 2. Die hintere Kontur 8' des Bilds des Reflektors 4' zeigt ebenfalls eine Verschiebung parallel zur ursprünglichen Kontur um denselben Abstand d auf. Der verschobene Teil der Kontur 8' (Ausbuchtung) ist mit 80 bezeichnet. Der Abstand d, der das Ausmaß der Konturveränderung beschreibt, ist nun eine Funktion der Temperatur in dem - nicht dargestellten - erwärmten Teilgebiet (Objekt 3) in der Prostata 2. Im allgemeinen nimmt der Anstand d als Funktion der Temperatur mit wachsender Temperatur monoton zu. Somit kann ein maximaler Abstand dₘₐₓ bestimmt werden, der einer maximalen Temperatur oder einem bestimmten Zerstörungsgrad des erhitzten Gewebeteils entspricht. Bei Erreichen dieses maximalen Abstands dₘₐₓ kann dann die Erwärmung des Gewebes unterbrochen oder zumindest abgeschwächt werden. Dies erlaubt eine zuverlässige Bestimmung der Temperatur in dem vor dem ausgebuchteten Teilbereich 40' des Reflektorabbilds 4' liegenden Gewebes im allgemeinen und eine zuverlässige Steuerung der Thermotherapie im besonderen.

Geht man beispielsweise bei normalem Gewebe von einer Schallgeschwindigkeit von 1540 m/s aus, so kann sich diese Geschwindigkeit bei einer Temperaturerhöhung um 10°C auf 1558 m/s erhöhen. Eine Gewebszone als Objekt 3 mit 10 mm Länge, die im Puls-Echo-Fall zweimal durchlaufen wird, erzeugt dadurch eine zeitliche Verschiebung der Echopulse RP um 0,15 µs. Dies erzeugt im B-Bild 5 eine axiale Konturverschiebung um den Abstand d = 0,11 mm. Diese Verschiebung von 0,11 mm ist bei einer Ultraschallmittenfrequenz von typischerweise 5 MHz gut auflösbar. Eine Ausbuchtung in dieser Größenordnung ist bei einer sonst zusammenhängenden starken Reflektorlinie auch optisch im B-Bild gut erkennbar.

Um die Erkennung der Konturen 7 und 8 des Reflektors 4 in Bild 5 zu erleichtern, wird vorzugsweise ein Reflektor 4 mit einer akustischen Impedanz verwendet, die deutlich von der Impedanz des umliegenden Mediums abweicht. Bei der Prostata-Thermotherapie kann der Urether dazu mit Luft gefüllt werden oder ein Katheter als künstlicher Reflektor 4 in den Urether eingebracht werden. Der Katheter kann dabei mit einem Medium mit hoher Impedanz im Vergleich zu Körpergewebe beispielsweise Glycerin oder einem Medium mit niedriger Impedanz, beispielsweise Luft, gefüllt sein. Der Reflektor 4 weist vorzugsweise zusammenhängende Konturen im Bild 5 auf, die homogen über den maximalen Abmessungen des Objekts 3 sind.

Die Bestimmung der Temperatur in einem Objekt mit einem Ultraschallabbildungssystem und einem Reflektor hinter dem Objekt ist nicht auf die Anwendung bei der Thermotherapie beschränkt, sondern kann auch in anderen medizinischen oder technischen Anwendungen eingesetzt werden.

## Patentansprüche

1. Verfahren zum Bestimmen der Temperatur in einem Objekt (3), bei dem
a) Ultraschallpulse (UP) erzeugt werden und das Objekt (3) sowie ein in einer Laufrichtung der Ultraschallpulse (UP) hinter dem Objekt (3) angeordneter akustischer Reflektor (4) mit diesen Ultraschallpulsen (UP) beschallt werden;
b) aus reflektierten Ultraschallechosignalen (RP) ein Bild (5) aufgebaut wird, das wenigstens eine Kontur (7', 8') des Reflektors (4') darstellt, und bei dem
c) die Kontur (7', 8') des im Bild (5) dargestellten Reflektors (4') mit einer vorab ermittelten Kontur (7', 8') des Reflektors (4') im Bild (5) bei einer vorgegebenen Referenztemperatur im Objekt (3) verglichen wird und anhand dieses Vergleichs die Temperatur im Objekt (3) ermittelt wird.

2. Verfahren nach Anspruch 1, bei dem zum Vergleichen der Konturen (7',8') eine Mustererkennung verwendet wird.

3. Verfahren nach Anspruch 2, bei dem die Mustererkennung mit Hilfe eines neuronalen Netzes durchgeführt wird.

4. Einrichtung zum Bestimmen der Temperatur in einem Objekt (3) mit
a) einem Ultraschallabbildungssystem (20), das Ultraschallpulse (UP) erzeugt und das Objekt (3) und einen in Laufrichtung der Ultraschallpulse (UP) hinter dem Objekt (3) angeordneten akustischen Reflektor (4) mit diesen Ultraschallpulsen (UP) beschallt und aus reflektierten Ultraschallechosignalen (RP) ein Bild (5) aufbaut, das wenigstens eine Kontur (7, 8) des Reflektors (4) darstellt, und
b) einer Analyseeinrichtung (30), die durch Vergleich der Kontur (7', 8') des Reflektors (4') im Bild (5) mit einer vorab ermittelten Kontur (7', 8') bei einer vorgegebenen Referenztemperatur des Objekts (3) die Temperatur im Objekt (3) bestimmt.

5. Einrichtung nach Anspruch 4, bei der die Analyseeinrichtung (30) ein Mustererkennungssystem zum Erkennen der Konturen (7', 8') des Reflektors (4) aufweist.

6. Einrichtung nach Anspruch 5, bei der das Mustererkennungssystem ein neuronales Netz enthält.

7. Einrichtung nach einem der Ansprüche 4 bis 6, bei der das Ultraschallabbildungssystem (20) einen Sektor-Scan als Bild (5) erzeugt.

8. Einrichtung nach einem der Ansprüche 4 bis 6, bei der das Ultraschallabbildungssystem (20) einen Linear-Scan als Bild (5) erzeugt.

9. Vorrichtung zum Erhitzen eines Objekts (2) mit Ultraschall (U), umfassend
a) eine Behandlungseinrichtung (10) zum Senden von auf das Objekt (3) fokussiertem Ultraschall (U),
b) eine Einrichtung zum Bestimmen der Temperatur in dem Objekt (3) nach einem der Ansprüche 4 bis 8, die mit der Behandlungseinrichtung (10) verbunden ist zum Regeln der Temperatur im Objekt (3) durch Steuern der Intensität des von der Behandlungseinrichtung (10) auf das Objekt (3) fokussierten Ultraschalls (U).

10. Vorrichtung nach Anspruch 9, bei der die Einrichtung (30) zum Bestimmen der Temperatur ein Warnsignal ableitet, wenn die Änderung der Konturen (7',8') des Reflektorabbilds (4') eine vorbestimmte Grenze überschreitet.
